# EUROPEAN PATENT APPLICATION

(11) **EP 3 733 551 A1**
(43) Date of publication of application: **04.11.2020**
(21) Application number: 20172606.4
(22) Date of filing: 01.05.2020
(51) Int. Cl.: B65D 77/06, B65D 83/00

(54) **A REUSABLE CONTAINER**

(30) Priority: 01.05.2019 GB 201906117
(71) Applicant: Hall Management Service Ltd, Banham, Norfolk NR16 2DB (GB)
(72) Inventor: HALL, Adrian John, Banham, Norfolk NR16 2DB (GB)
(74) Representative: ip21 Ltd

(57) **Abstract**

The invention disclosed herein relates to a partially reusable container for retaining and dispensing a fluid, the container. The container comprises an outer bottle, said outer bottle having a neck region and a base, and being formed of two sections, releasably attachable to each other. to form the bottle. A product bag is included to hold a fluid, the bag being optionally secured, in fluid-tight arrangement about a neck element. The bag can have a neck region formed of a semi-rigid material. When in the closed configuration a neck element acts to retain the sections together to form the bottle, and to this end includes catch elements which releasably engage corresponding securing elements on the sections. Actuation means can be provided to easily operate the catch elements.

## Description

### Field of the Invention

The present invention relates to a reusable container, typically a bottle for retaining liquid such as a liquid soap, detergent, drink or the like. The container is to be used in conjunction with a disposable retainer such as a bag which holds and is in contact with the liquid.

### Background to the Invention

It is of increasing concern to the public as to the extent to which the environment is being polluted by waste plastics materials. Many regions are despoiled beyond recognition by floating or semi-submerged accumulations of articles made from plastics materials. Moreover, large areas of land used as landfill sites are contaminated by buried plastic articles.

One of the main reasons for the difficulties encountered, apart from the sheer number of articles, is that many plastics used, particularly those used to contain liquids, do not readily biodegrade: even when exposed to sunlight and atmospheric oxygen. For example, although polyethylene terephthalate can degrade in 5 to 10 years, other commonly used materials derived from ethylene or propylene can take from around 100 years to millennia to biodegrade.

Although materials to replace their usage are being developed, which are more biodegradable, these are at present usually more expensive due to the monomer source which is typically cellulosic and plant based, and the processing required.

The problem is generally exacerbated by many of the bottles used being regarded as single-use items and so being thrown away once empty. Although people are starting to be encouraged to re-use bottles, this is not always an easy task to carry out, particularly where the liquid being considered is relatively viscous and so difficult to administer back into the bottle, especially where the entrance to the bottle is relatively narrow.

It is an object of the present invention to provide a bottle which addresses the above problems. It is the further object of the invention to provide a method of constructing a bottle to aid in the bottle's re-use.

### Summary of the Invention

According to a first aspect of the invention there is provided a partially reusable container for retaining and dispensing a fluid, the container comprising;
an outer bottle, said outer bottle having a neck region and a base, the bottle comprising two at least partially releasably attachable sections, moveable relatively between a closed configuration to form the outer bottle and an open configuration allowing a product bag to be inserted or removed;
a product bag attached in fluid tight connection to a neck element, said neck element including a channel opening into the product bag interior, enabling fluid to exit the bag via the channel;
the neck element configured to releasably engage the neck region of the bottle, the neck element including a catch element engaging a securing element on a bottle section to prevent separation of the neck element and bottle section, actuation of the catch element disengaging the neck and securing elements to allow said separation.

The arrangement reduces the amount of waste material produced as the outer container can be readily reused and moreover the bag can be formed of biodegradable material, again reducing the burden on the environment.

Preferably, the container includes an actuation means to actuate a catch element which facilitates operation.

Preferably, the catch element includes a hook element engaging a corresponding securing element hook on a securing element to hold the neck element and the bottle sections together and also release same from each other as and when required.

Optionally, a section includes a flange, frictionally engaging a rebate on the other section when the bottle is in the closed configuration and providing additional resistance to separation of the sections when separation is not desired..

Preferably, the sections are of identical shape. This facilitates the manufacturing process and costs associated therewith.

The sections are preferably so configured that on securing the bottle in the closed configuration, at least a portion of the sections engage under tension, thus facilitating separation of the sections from one another.

Conveniently, the neck element includes a ridge formation engaging a corresponding ridge formation on a section to prevent relative rotation of the neck element and the section.

Preferably, a section includes adjacent tubular apertures directing access of a user's fingers to a catch element to actuate the catch element and so easing use.

The actuation means on opposing sections are preferably actuated by pivoting the actuation means with the respective pivot planes mutually parallel. The force needing to be used by an operator is thereby reduced.

Preferably, the neck element includes a wing beam, intermediate the actuation means and the catch element, pivoting of the actuation means engaging and moving linearly the wing beam which linear movement itself moves the catch element to disengage from the securing element. The wing beam reduces movement required of the actuation means to release the sections from engagement.

Preferably, an actuation means comprises a button movable by pressure towards the bottle axis the button movement flexing the catch element and disengaging the catch element from the securing element. The actuation means being operable by means of pressure along the axis of the bottle, which aids usage, reducing the risk of slippage of the bottle from the user's hands.

Preferably, a container includes a dispensing means, such as a spray nozzle, releasably attachable to the neck element, allowing fluid to be dispensed from the bag.

According to a further aspect of the invention there is provided a partially reusable container for retaining and dispensing a fluid, the container comprising;
an outer bottle, said outer bottle having a neck region and a base, the bottle comprising two sections, releasably attachable to each other to form the outer bottle;
a product bag to hold a fluid, the bag having a neck region of a semi-rigid material, and having a bag-neck section to engage a neck section of the bottle, to maintain the neck sections in contiguous contact;
the bag being configured to enable dispensing means, attachable to the bottle, to be placed in a fluid contained in the bag allowing the fluid to be dispensed from the bag.

Preferably, the neck section of the bag includes a removable insert, said insert having a screw-thread on an external surface, complimentary to that on an inner surface of the product bag neck section and enabling the insert and the bag to be secured together. The threadable insert aids in securing the product bag to the bottle.

Optionally the bag comprises a plurality of ribs on the outside surface of the bag neck section, which in use extend, optionally, generally downwardly in the direction of the bottle base, along the outside section of the bag neck section, to aid in stabilising the bag against the bottle. The ribs aid stability where the inside surface of the bottle neck section is smooth, or at least as no threaded portion. Further optionally, the inside surface of the neck section of the bottle also comprises downwardly directed ribs to engage the ribs on the bag and to prevent relative rotation of the bag and the bottle.

The insert preferably comprises a handle to aid in removal of the insert. The handle can be used to twist the insert relative to the bag to unscrew the insert from the bag. The handle further preferably is extendable from a storage configuration to a use configuration, the user pulling on the handle to cause said extension.

Optionally, the insert is secured to the bag by means of a weakening, a ring-pull tab or the like to prevent, until required, the handle from turning relative to the bag and so opening the bag to allow fluid egress.

Optionally the two bottle sections are separable along a circumferential line about the bottle. Alternatively, the sections are separable about a line joining the neck portion to the base of the bottle.

Preferably, the two bottle sections are joined together by one or more of a lock and key mechanism, a clip, or a hinge. Other means known in the art can also be utilised.

According to a second aspect of the invention, there is provided a product bag to hold a fluid, the bag having a neck region of a semi-rigid material, and having a bag neck section to engage a neck section of a bottle, to maintain the neck sections in contiguous contact;
the bag being configured to enable dispensing means, attachable to the bottle, to be placed in a fluid contained in the bag allowing the fluid to be dispensed from the bag,
the bag neck section including a removable insert, said insert having a screw-thread on an external surface, complimentary to that on an inner surface of the product bag and enabling the insert and the bag to be secured together.

The insert preferably comprises a handle to aid in removal of the insert from a product bag. The handle can be used to twist the insert relative to the bag to unscrew the insert from the bag. The handle further preferably is extendable from a storage configuration to a use configuration, the user pulling on the handle to cause said extension.

Optionally, the insert is secured to the bag by means of a weakening, a ring-pull tab or the like to prevent, until required, the handle from turning relative to the bag and so opening the bag to allow fluid egress.

According to a third aspect of the invention, there is provided a bottle, said bottle having;
a neck region and a base, the bottle comprising two sections, releasably attachable to each other to form the bottle; enabling the bottle sections to be separated to allow a bag to be inserted and subsequently re-secured together.

Optionally the sections are separable along a circumferential line about the bottle. Alternatively, the sections are separable about a line joining the neck portion to the base of the bottle.

Preferably, the two bottle sections are joined together by one or more of a lock and key mechanism, a clip, or a hinge. Other means known in the art can also be utilised.

### Brief Description of the Drawings

The invention is now described with respect to the accompanying drawings which show by way of example only three embodiments of a bottle and bag to store fluids. In the drawings:
Figure 1 is a perspective view of the first embodiment of a bottle;
Figures 2a, 2b are first and second embodiments of the inserts and neck sections of a product bag and used in conjunction with the bottle of Figure 1;

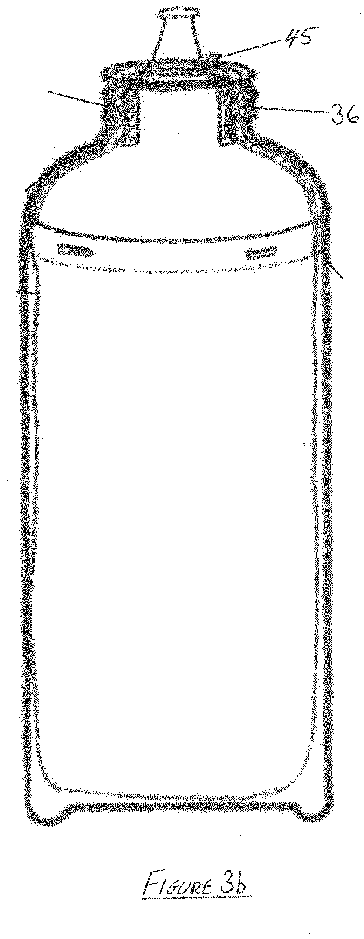

Figure 3 is an illustrative view of the bottle of Figure 1 having an insert as shown in Figure 2a;
Figures 4a to 4c are, respectively, a sectional view of a second embodiment of a bottle, a profile view of the bottle of Figure 4a, and an inside view of the base of the bottle of Figure 4a;
Figure 5 is a sectional view of a third embodiment of a bottle;
Figure 6 is an illustrative view of a bottle of Figure 5, including a product bag and having a third embodiment of insert;
Figure 7 is a top illustrative view of a first embodiment of a neck assembly;
Figure 8 is a top illustrative view of second embodiment of a neck assembly;
Figures 9a, 9b illustrate a third embodiment of a bottle;
Figures 10a - c show a fourth embodiment of a bottle, including a neck element;
Figures 11a and 11b illustrate assembly of the bottle of Figures 10;
Figures 12a - 12d illustrate a catch shown in the fourth embodiment of Figures 10;
Figure 13 is a perspective view of the fourth embodiment of bottle of Figure 10;
Figures 14a and 14b illustrate a fifth embodiment of bottle and a body portion of the fifth embodiment of bottle;
Figure 15 is a perspective view of the neck element of the fifth embodiment of Figures 14;
Figures 16a and 16b illustrate the neck of the body portion of the fifth embodiment;
Figures 17a and 17b illustrate a sixth embodiment of a bottle;
Figures 18a - 18d illustrate the release mechanism for a neck element of the sixth embodiment;
Figures 19a - 19c illustrate a release mechanism for a neck element of a seventh embodiment; and
Figures 20a and 20b illustrate an eighth embodiment of a bottle.

### Detailed Description of the Invention

Currently, it is recognised that the number of plastic bottles which is produced and subsequently disposed of into the environment, even in municipal waste systems, is far too high. The long time period required for the materials from which the bottles are made to degrade means that they remain virtually unchanged for tens, and in some cases hundreds of years or longer. Additionally, the plastics typically used are derived from non-renewable sources such as oil and gas and hence are unsustainable for use in the long term.

Although efforts are being made to form such bottles of biodegradable materials, this has so far not proved fully possible. One of the reasons for this is that the raw material for such materials, which is primarily cellulosic or otherwise plant-based is not available in sufficient quantities to fulfil the demand for the bottles, particularly those having the required structural integrity, and which typically require a thicker bottle wall.

The present invention seeks to address the above problems by enabling the use of a product bag formed of a biodegradable material, which requires less material to construct the walls of a conventional container.

In its broadest aspect, the invention provides a dispenser or container comprising a first outer bottle, which can be used repeatedly, and a second, inner, replaceable container which is typically single-use, and which is preferably formed of a biodegradable material. The outer bottle is formed of two or more sections which at least partially separate from each other, enabling an inner container to be secured into position, and subsequently retained within the outer bottle once the sections are closed together.

The inner container has a neck configuration which enables the inner container to frictionally or otherwise engage the outer bottle to secure the inner and outer containers into position and allow the inner container to be opened, providing access by the user to the inner container's contents.

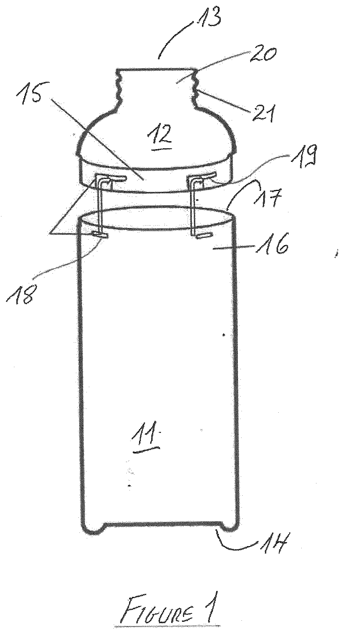

Referring initially to Figure 1, this shows a first embodiment of an outer container bottle 10, which can be used in conjunction with an inner container to retain liquids such as shampoos, detergents, drinks etc. The bottle 10 can be formed of, for example, aluminium which enables the bottle 10 to be washed and re-used and also provides rigidity to the overall container, protecting the inner container. However, other materials can be used, including plastics materials known in the art. The bottle 10 comprises two main sections: a lower section 11 in which the main volume of liquid being retained is held, and an upper section 12 which includes an outlet 13 for the liquid held in the inner container. The base 14 of the lower section 11 is profiled to provide stability to the bottle 10 when the bottle 10 is placed on a surface.

The two sections 11, 12 of the bottle 10 are readily detachable and attachable to each other. In the embodiment shown in Figure 1, this is achieved by firstly providing an inner sleeve 15, on the upper section 12, whose outer diameter is less than that of the inner diameter of the upper portion 16 of the lower section 11, and also of the part of the upper section 12 adjacent the sleeve 15. The sleeve 15 therefore fits within the lower section 11 with the upper section 12 adjacent the sleeve 15 resting on the upper edge at 17 of the lower section 11. The upper section 12 is locked into position relative to the lower section 11 by means of a recessed lock 18 in the lower section engaging a key 19 in the upper section 12. The arrangement allows a twisting locking and unlocking action of the bottle 10. In an alternative embodiment, not illustrated, the sleeve is located on the lower section and fits within the upper section.

The upper section 12 is provided with a neck 20 whose outer surface is profiled or otherwise provided with a threaded structure 21 enabling a trigger, pump, or other closure mechanisms to fit into the bottle to enable the contents of a bottle 10 to be dispensed.

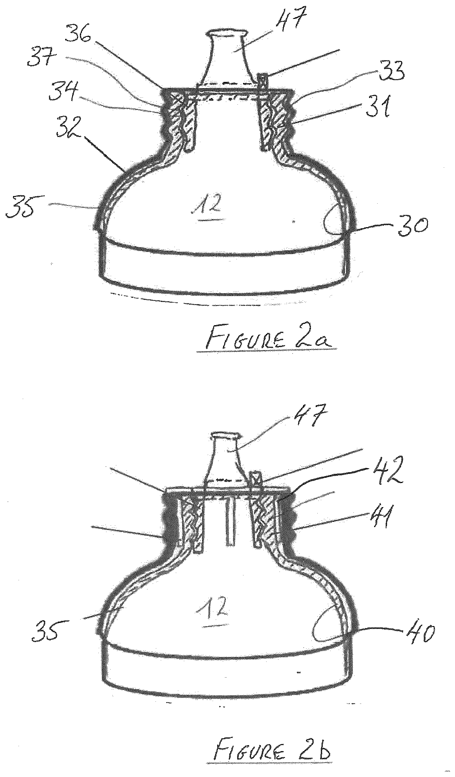

Two embodiments of an upper section are shown in more detail in Figures 2a, 2b which show two embodiments of the neck section of a product bag or pouch 30, 40 to be utilised, depending upon the configuration of the inner surface of the neck 20 of the bottle 10. In respect of the embodiment of Figure 2a, the neck 31 on the upper section 32 of the bag 30 has an outer thread 33 and an inner thread 34. The wings 35 of the product bag 30 extend upwardly to the bottle neck-engaging end where the wing 35 is profiled to have a threaded configuration complimentary to that of the inner surface of the neck 20. The wings 35 are formed of a semi-rigid material, which provides sufficient rigidity to the bag 30 to enable the bag 30 to be twisted or pushed into engagement with the bottle 10 without the bag 30 being distorted in shape. As used herein, semi-rigid material is to be construed to mean a material of sufficient rigidity to maintain stability within the outer bottle. The remaining part of the bag 30 can be formed of a less rigid material.

The product bag 40 of Figure 2b differs in that the neck 41 of the bag 40 has no outer thread and is suitable to engage bottle necks having no inner thread. Typically, a bag 40 is provided with means to prevent relative rotation of the bag 40 to the bottle 10 in the embodiment.

A fluid seal cap or insert 36, also of a semi-rigid material and having an outer-facing thread 37, complimentary to the thread 34 on the inner surface of the wing 35, is screwed into threaded engagement with the product bag 30.

The cap 36 provides a seal across the fluid exit of the product bag 30 to prevent the fluid from exiting the bag 30 prior to its insertion into the upper section 12. The removal of the cap 36 enables a user to access the contents of the product bag 30.

In order to use the bottle 10, the cap 36 needs to be removed to allow insertion of a dispensing means, for example, the tube of a trigger pump mechanism of a type known in the art. To assist in removal of the cap 36, a handle 47 is provided in the cap 36 which can be used to unscrew the cap 36 from the bag 30. The cap handle 47 surmounts the cap 36 and has a curved frusto-conical shape, to aid manufacture and use. Once the cap 36 is unscrewed and removed, the pump mechanism can be inserted by threading onto the outer thread of the upper section 12.

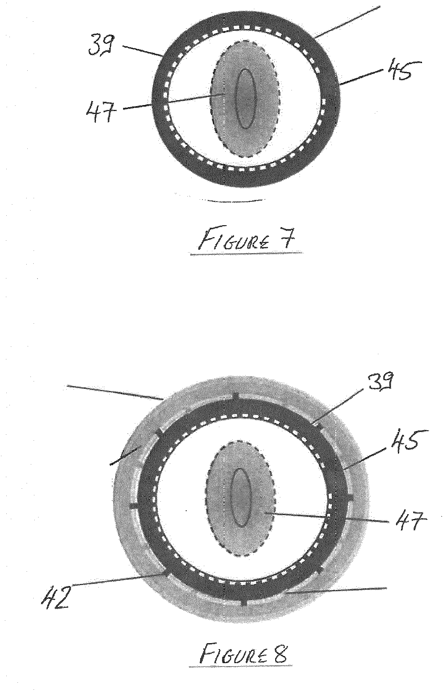

To prevent access by a child to the contents, before the bag 30 is incorporated into a bottle 10, a childproof mechanism is included as part of the bag 30. This can be seen in Figures 7 and 8. The cap 36 is removable from the bag 30 once the bag 30 has been pulled through the neck 20 of the bottle 10: optionally utilising the handle 47. To assist the cap's 36 removal, a weakening is provided in the bag 30. The removal of the cap 36 acts to open the bag 30 allowing the contents to be removed when required.

In order to prevent the removal of the cap 36 unintentionally, or by a child, a tamperproof ring 39, actuated by the tab 45 is located over the cap 36. Removal of the ring 39 allows access to the cap 36.

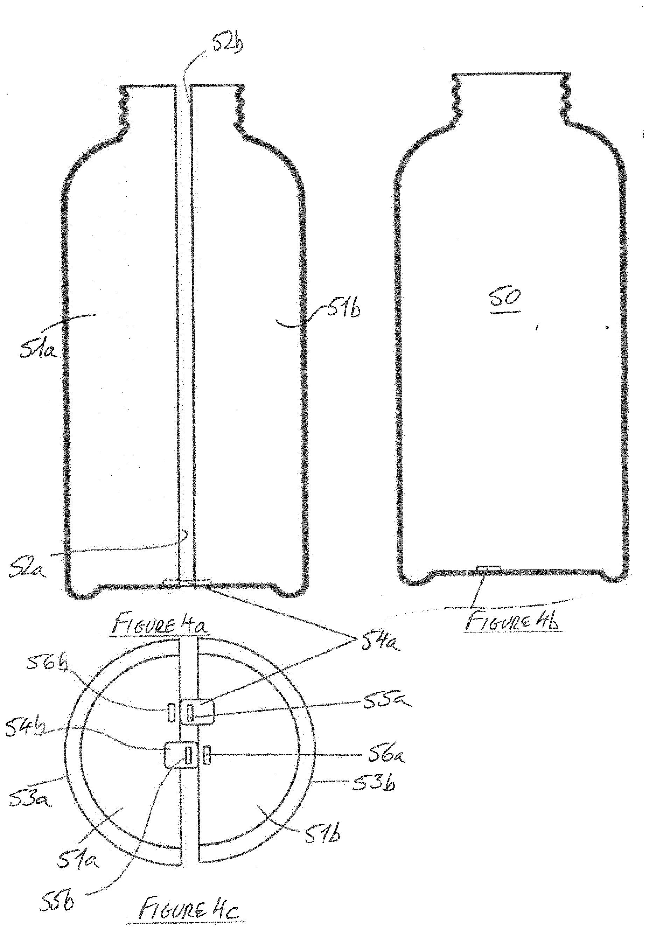

Figures 4a to 4c illustrate a further embodiment of a reusable bottle. The bottle 50 has two main body sections 51a, 51b which releasably join together along their respective vertical edges 52a, 52b. In the illustrated embodiment of Figures 4, the body sections 51a, 51b are held together by a clip and groove arrangement, on the base 53a, 53b of the body sections 51a, 51b. Each clip 54a, 54b is attached to the base 53a, 53b of the body sections and has a recessed lock section 55a, 55b which engages a corresponding groove 56a, 56b on the opposite section to hold the sections 51a, 51b together. Locking and unlocking is aided by the resilient nature of the material from which the clips 54a, 54b are made.

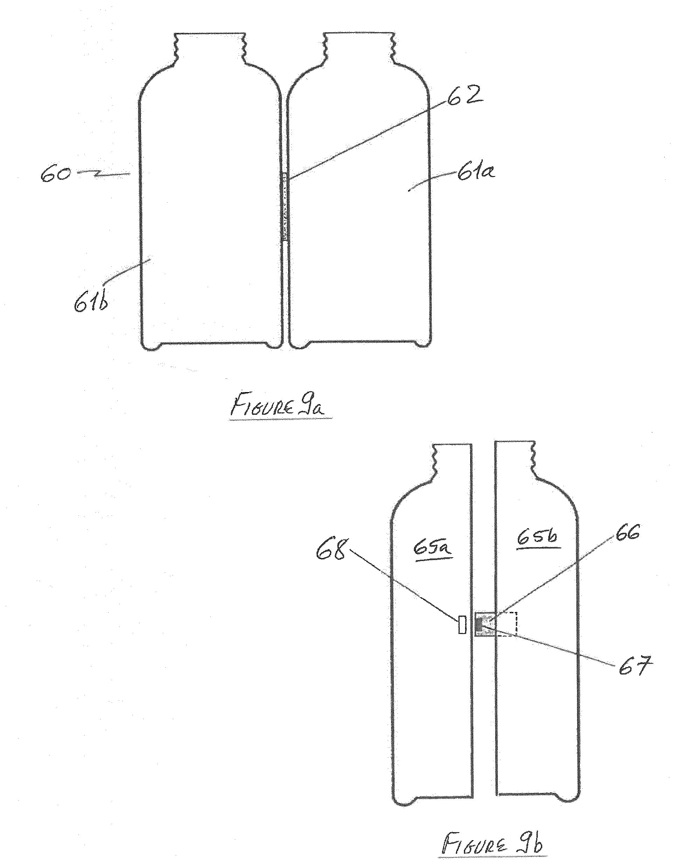

Turning now to Figure 9a, and in a preferred arrangement, the two body sections 61a, 61b are held together by means of a hinge arrangement 62 which allows the two sections 61a, 61b to flex apart to enable an inner product bag to be inserted/removed from the bottle 60. In an alternative hinge arrangement not illustrated, and which is particularly suited for bottles formed of a metal, the hinge arrangement comprises an arrangement preferred on spectacle cases. In this embodiment, the bottle can be manufactured as a single unitary object which reduces the costs of manufacture as the number of any assembly steps required, of the different parts is reduced. The product should also be longer lasting as there are fewer joins between separate elements. In a further non-illustrated embodiment, the hinge is formed from a single piece of plastics material adjoined with thinner flexible sections.

In the embodiment of Figure 9b, the two sections 65a, 65b are held together by a clip arrangement similar to that shown in Figure 4a - 4c. A clip plate 66 is attached to the inside of the section 65b. The clip plate 66 has a raised insert 67 which in use engages the cut out 68 in the inside of the section 65a. Further clip plates can be included at other parts of the sections 65a, 65b.

In use and referring to the embodiment of Figure 1 having an upper section as shown in Figure 2a, and in order to assemble a dispenser, the user first removes from a bottle 10 a trigger, pump, cap etc (referred to herein as dispensing means) which is in place and which closes the bottle 10 during use. The two sections 11, 12 are twisted in opposite directions relative to each other allowing the two sections 11, 12 to be separated from one another. The upper section 12 is placed over the neck 31 of the product bag 30. Where the bottle 10 has an inner thread 21, the user holds the handle 47 of the cap 36 and at the same time twists the upper section 12 to threadably connect the product bag 30 to the upper section 12 specifically onto the neck 31 of the product bag 30.

The lower section 11 is then placed around the product bag 30 and moved towards the upper section 12 until eventually the inner sleeve 15 of the upper section 12 is fitted within the lower section 11. Sections 11, 12 can then be twisted relative to each other to secure the lock 18 and the key 19 together.

The tab 45 is actuated and utilised to remove the tamper proof ring 39 from the product bag 30. The cap 36 is then twisted to release the cap 36 from the product bag 30 and so opening the product bag 30 and enabling the product contained therein to be accessed.

The dispensing means is connected to the bottle 10, with any connection tube of the dispensing means placed in the contents of the product bag 30. The dispensing means can be, for example, twisted onto the outer thread 21 of the bottle neck 20.

Where the bottle 10 has an upper section 12 in which the inner surface of the neck section is flat as shown in Figure 2b, having no thread, the product bag 30 is pulled firmly by gripping the handle 47 whilst pushing in the opposite direction of the upper section 12 so that the friction fit between the bag 30 and the bottle 10 is produced. The fit is aided by the provision of ribs 42, on the bag 40, extending downwardly in the direction of the base of the bottle 10 and on the outside of the bag 30. Additionally, the inside surface of the bottle neck 20 also has downwardly extending ribs which co-operate with the ribs 42 on the bag 30 to prevent the bottle 10 and the bag 30 from rotating relative to each other, particularly when removing the cap 36 or twisting the handle 47. Typically, the ribs 42 are formed integrally with the bag 30..

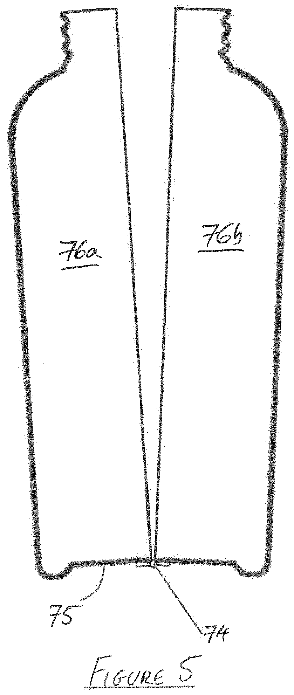

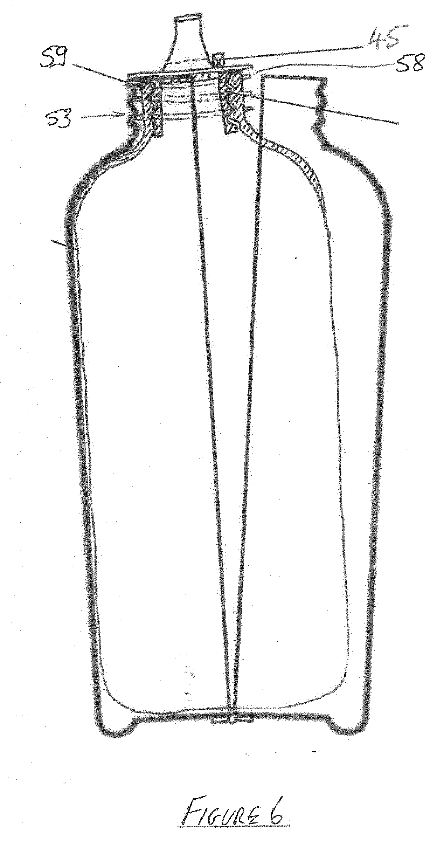

The embodiment of insert of Figure 6, as shown here in conjunction with the embodiment of bottle 50 of Figure 5 is in connection with horizontally deployed ribs 58. The ribs 58 engage the inner thread 59 of the neck 53 of the bottle 50. The ribs 58 can be utilised, for example, where the thread in a bottle is insufficient to allow complete threaded engagement to occur, or also where the inner surface of the neck is corrugated with concentric rings.

Replacement of a used product bag 30 is achieved as above, but is however preceded by the following steps to remove said used bag. First, the dispensing means is removed from the bottle and, if deemed appropriate, washed. The upper and lower sections 12, 11 are then contra-rotated to separate them from each other. A further product bag 30 is threadably connected to the upper section 12 and the product bag 30 is unscrewed from the neck. Alternatively, where the product bag 30 is held to the upper section 12 by a friction fit arrangement, then the product bag 30 can be pulled out.

A new product bag 30 can then be secured in position.

With reference to the bottles of Figures 4 - 6 and 9, having a vertical split into two portions, an assembly is as follows. First, the dispensing means is removed. The two sections are then separated from each other. Where the bottle has two sections joined together by means of a hinge 74 on the base 75, in accordance with Figure 5, the hinge 74 is opened by pulling the two sections 76a, 76b apart from the top. Where the bottle 60 has a hinge 62 on the side, as shown in Figures 9a, 9b, then a clip plate 66 in the side of the bottle releases the two sections 61a, 61b to be pulled apart. Alternatively, where the two sections are secured together by means of clips from the base, as shown in Figures 4, these can be actuated to allow the sections to be pulled apart. The product bag 30 is laid into one of the sections of the bottle, whereby the top of the neck of the product bag is aligned with the top of the neck of the bottle. The two sections of the bottle are brought together, utilising the hinge and/or clipped to hold the sections together.

The tab on the child resistant ring is pulled to remove the ring from the cap, and the cap twisted and removed to open the product bag. A dispensing means is inserted in the same manner as for the horizontally joined bottle.

Similarly, where the product bag is to be replaced by a bottle having a vertical split, the dispensing means is removed from the bottle. The two vertical sections are separated from one another as described above, and the empty product bag removed. A new product bag is inserted into the bottle as described above.

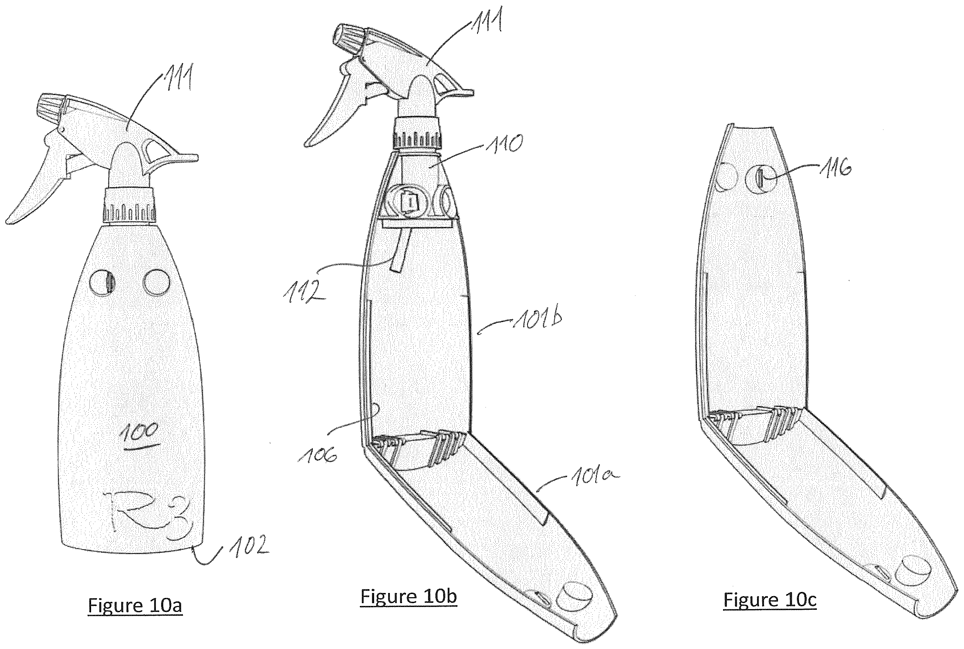

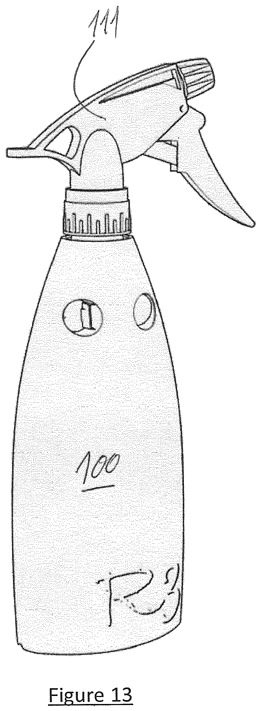

The embodiments shown in Figures 10 - 20 utilise an inbuilt neck element on which the product bag or pouch containing the fluid is housed. It is primarily intended that the pouch be supplied to a user already including the fluid and already secured to the neck element. When a user needs to replace a used pouch therefore the neck element, together with the pouch, is removed from the bottle and can be disposed of. The amount of plastics material sent to waste is therefore reduced over that when a conventional bottle is used. A new neck element and pouch can then be installed into a bottle.

Referring to Figures 10a - 10c, these show a bottle 100 which comprises two sections 101a, 101b hingedly mounted together along the base 102. The sections 101a and 101b have the same 3-dimensional form and can be manufactured from the same mould, which reduces manufacturing costs overall. At the upper end of each section are provided means to enable a neck element to be supported and also for a mechanism to release the two sections 101a, 101b from each other when required. The sections 101a, 101b are formed from the same materials as those described above for the already-described embodiments and can be a plastics material.

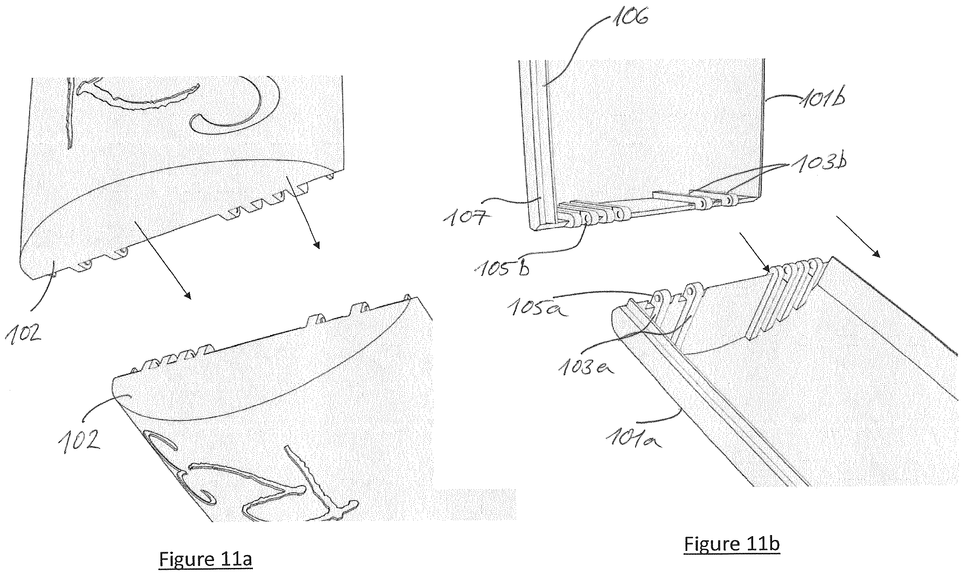

At the base of a section 101a, 101b (see Figures 11) are provided fingers 103a and 103b which extend from the base edge 104. In the exemplified embodiment, the fingers 103a are arranged in a bank of 2 and the fingers 103b in a bank of 4 fingers. Projecting from the outer edges of the fingers 103a are lugs 105a. In use, the fingers 103a sit between the fingers 103b and the lugs 105a engage corresponding recesses 105b in the fingers 103b to provide a pivoting joint between the sections 101a, 101b. Due the resilient nature of the fingers 103a, 103b the lugs can be easily pushed into position within the recesses, but their removal is more difficult providing a robust joint between the sections 101a, 101b. Once the joint has been established, the two sections 101a, 101b can be pivoted towards each other. The pivoting brings together a flange 106/rebate 107 arrangement with a flange 106 on one section engaging with the rebate on the other section. The frictional engagement of the flanges and rebates resists opening of the bottle 100 once the bottle and neck/pouch has been assembled, but allows separation of the sections 101a, 101b when required.

The end face of the base edge 104 of one or both of the sections 101a, 101b is optionally at an angle to the main axis of the assembled bottle 100. When both sections 101a, 101b have a slope then the slopes are such that the portions of the end face extended towards the opposing section meet each other, and that this portion is closest to the top of the bottle. Angles of up to 2° can be used, but is preferably around 1°. The end faces of the sections 101a, 101b when the sections 101a, 101b are secured together will thus be under tension and the tension acts to aid opening of the sections away from each other to replace a bag.

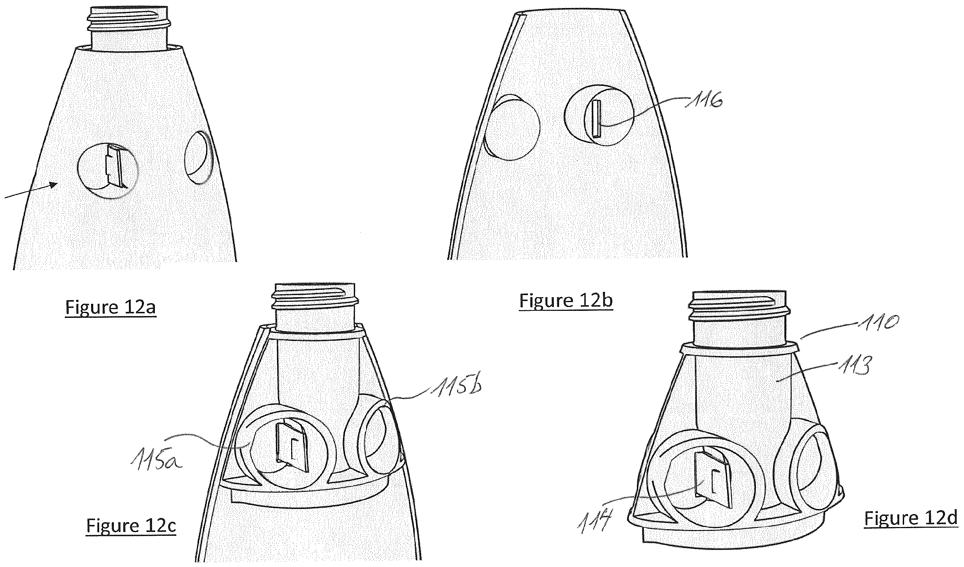

The neck element 110 shown in several of the figures 10 - 12 has at a first end a screw-thread allowing attachment of a spray-nozzle attachment 111 of a type known in the art. The spray-nozzle attachment 111 can be detached from the neck element 110 when the bag needs to be replaced, allowing reuse of the attachment 111 and a reduction in materials usage. The attachment includes a tube 112 (shown partially in Figure 10b) which extends to the base of the bottle 100 to ensure that the maximum amount of fluid held in a pouch can be readily removed. The neck element 110 has a neck 113. Extending from the neck 113 are two catches 114, one of which is shown in Figures 12c, 12d. The catches 114 are formed of a resilient material and housed to enable them to flex. Each catch 114 has a hook at first end. The hook engages a slot formed on the sections 101a. As shown in Figures 10c and 12b, each section has a pair of tubular formations 115a, 115b which extend through the walls of the sections 101a, 101b. The tubular formation 115a includes a slot 116 into which the hook on the catch 114 is seated. The resilient nature of the material from which the catches 114 are formed biases the hook into the slot 116, forming a closure means to retain the two sections 101a, 101b together. When the two sections 101a, 101b need to be released from each other to change a bag, the user reaches with their fingers through the apertures of the tubular formations 115a, 115b and exerts pressure on the second end of the catches 114 to bring the hook out of engagement with the slot 116 in which it is housed. It is envisaged that in a preferred embodiment the hooks on each catch engage the same section, although it is envisaged that opposite sections can be engaged by the different hooks.

In use therefore, to install a neck element and attached bag, the user opens the two case sections 101a, 101b. The neck element 110 is placed in position and the sections 101a, 101b pivoted towards each other about the hinge on the base 102. The flange and rebate arrangement are brought into engagement and pivoting continued until the catches on the neck element 110 engage the slots 116 to secure the sections 101a, 101b together and the neck element in position. The spray nozzle attachment 111 can then be installed which acts as a further means of securing the sections 101a, 101b together.

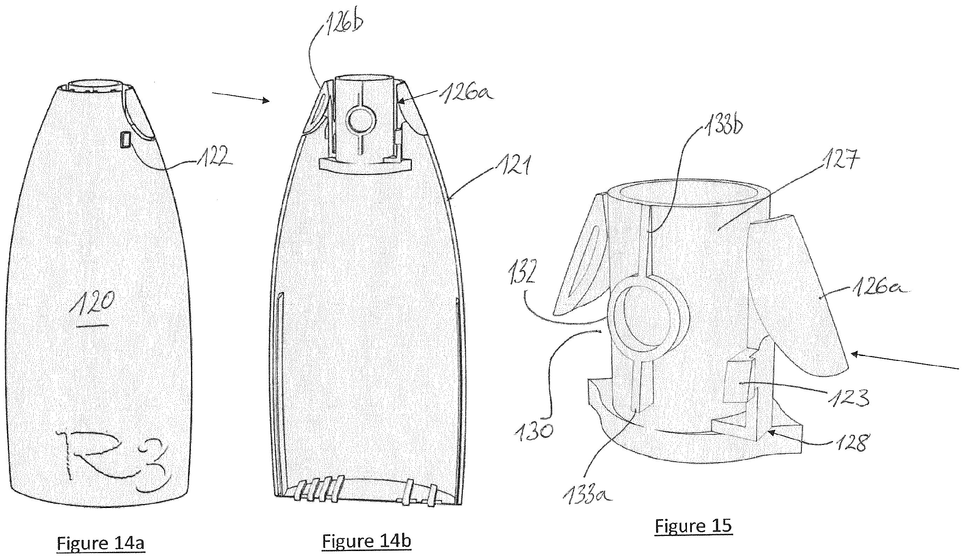

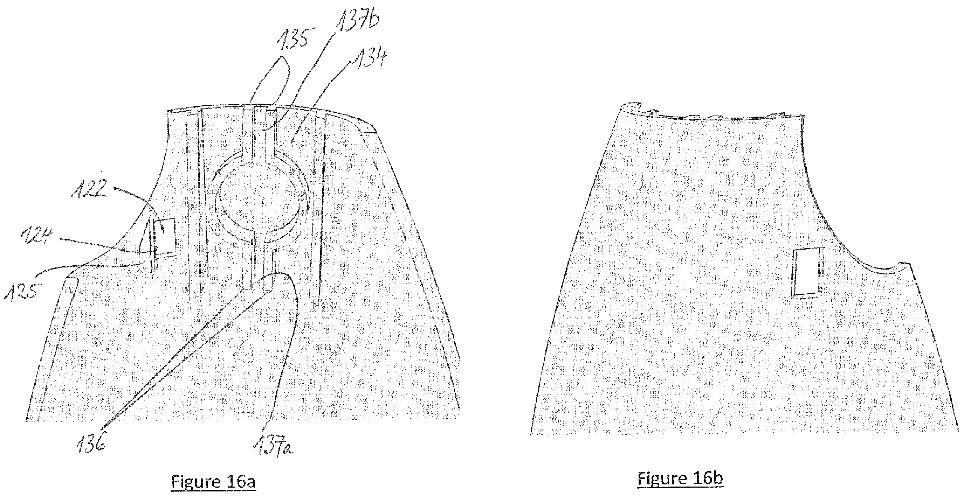

Referring to the fifth embodiment of Figures 14 - 16, the base-mounted hinge arrangement and the flange/rebate arrangement are as in the fourth embodiment already described. The means of securing and releasing the two bottle sections are however different from the previously described embodiment. From Figure 14a and Figures 16, it can be seen that the bottle 120 is, similarly to previous embodiments, formed of two sections, one of which, section 121 is shown in Figure 14b. The section 121 has a single through-aperture 122 which houses a catch element 123, located on a neck element 127. When in the retaining position, a hook (not shown) on the catch element 123 engages a slot 124 on a block 125 located on the bottle section 121. This prevents the bottle section 121 from moving laterally and hence the two bottle sections from pivoting apart from each other.

The catch element 123 is operably linked to a wing 126a. Said wing is pivotally mounted to the neck element 127. A corresponding catch element is provided to engage the other section of the bottle 120, said catch element being similarly operably linked to the wing 126b.

To release the sections 121 from each other, the catch elements 123 are operated by squeezing the lower portions of the wings 126a, 126b generally towards each other, although in offset, parallel planes. Inward pressure applied to a wing 126 causes the wing 126 to push against a seat element or wing beam 128, causing movement of the seat element 128. The movement of the seat element 128 acts to move the catch element 123, moving the hook on the catch element 123 out of retaining engagement with the slot 124 on the block 125. The sections 121 of the bottle 120 can then pivot away from each other.

A further feature of the neck element 127 is the rotation-prevention formation 130. The rotation-prevention formation 130 comprises a central circular ridge 132 with, extending from opposite points on the circle, two straight ridges 133a, 133b. The formation 130 is located in the corresponding formation 134 on the section 121. The formation 134 has a circular ridge 135 whose inner diameter is slightly larger than the outer diameter of the ridge 132. Further ridges 135 and 136, of the formation 134, form channels 137a, 137b in which the ridges 133a, 133b are seated. The formations 130, 134 co-operate to prevent rotation of the neck element 127 relative to the bottle 120 in the event of torque being applied, such as screwing the spray nozzle attachment.

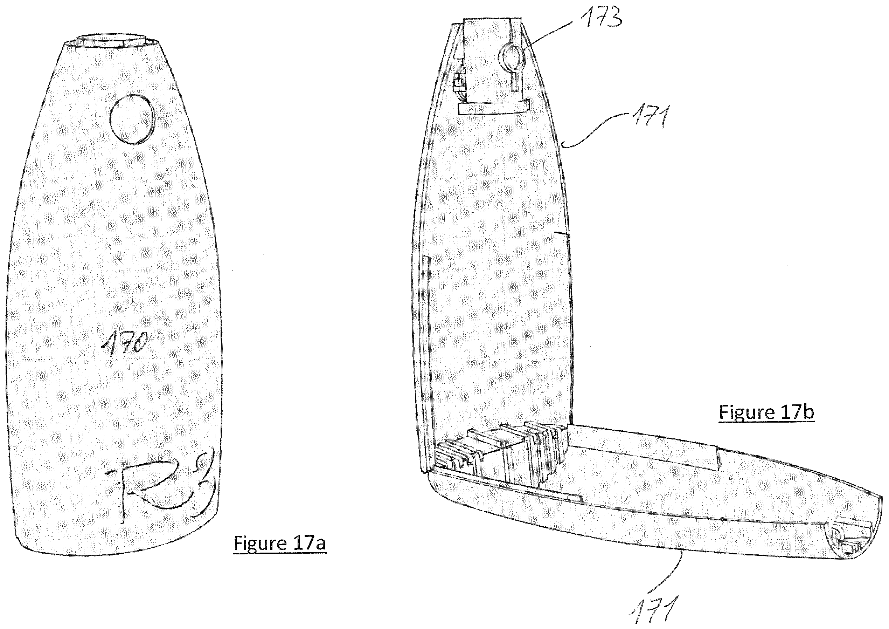

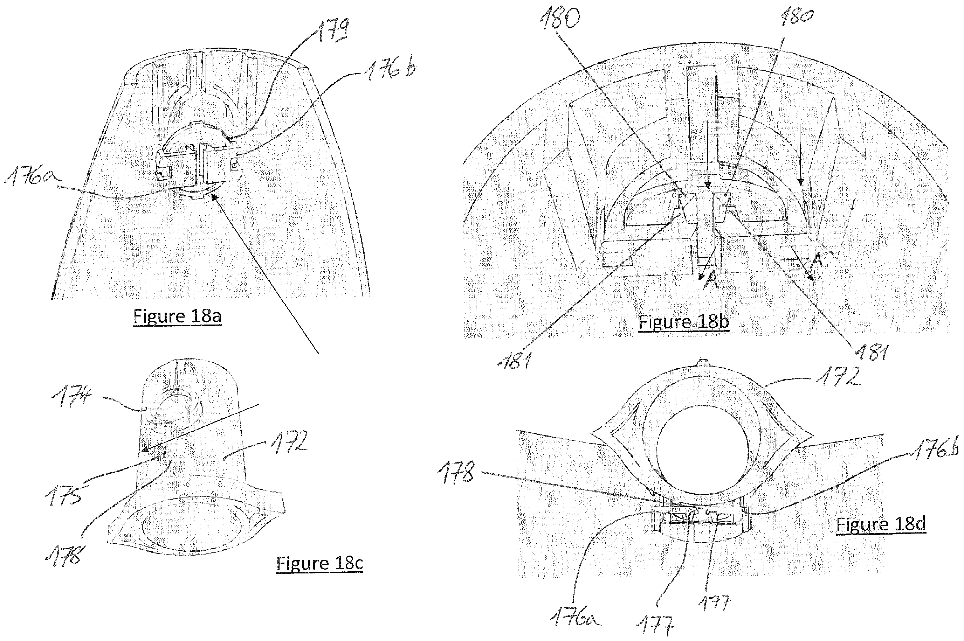

The sixth embodiment, as illustrated in Figures 17 and 18 again has a bottle 170 formed of two case sections 171a, 171b, hingedly mounted in the base region. The neck element 172 has along one side an anti-rotation formation 173 which co-operates with a complementary formation on the case section 171 as described for the fifth embodiment above. On the opposite side of the neck element is deployed a similar formation 174 as shown in Figure 18c. As can be seen however, one of the ridges 175 has a trapezoidal top region which gives the ridge a 'T-shirt' type cross-section. The cross-section enables a release mechanism to be provided as follows. The case is provided with a pair of flexible arms 176a, 176b. The arms 176a, 176b are profiled and so located in use, that the edges 177 of the trapezoidal region lie adjacent the outwardly facing ends of the arms 176. The bridge 178 of the ridge 175 passes between a space between the ends of the arms 176a, 176b. The sloping surfaces of the trapezoidal region assist this action. The engagement between the arms 176a, 176b and the ridge 175 prevents the neck element 172 from moving laterally and hence prevents the case sections 171a, 171b from pivoting away from each other.

Turning to Figures 18a, 18b these illustrate an activation button 179. The button 179 is inserted, on assembly of the bottle 170 into retaining arms on a case section 171. The button 179 includes a pair of teeth 180 of triangular cross-section, although other cross-sections can be used. These lie, when the sections 171 are forming the bottle, adjacent cam elements 181 on the arms 176a, 176b. In the illustrated embodiment the cam elements 181 have a trapezoidal shape, although other shapes can be used without departing from the scope of the invention. In order to separate the case sections therefore, the user depresses the button 179. This causes the teeth 180 to push against the sloping surfaces of the cam elements 181, exerting pressure on the arms 176 to flex outwards. The gap between the arms 176 is thus opened up as the arms 176 flex in the directions of the arrows A. Once the gap is sufficiently large, the ridge 175 can pass through the gap and the case sections 171 therefore are allowed to pivot away from each other, opening the bottle 170. The neck element 172 and the bag attached thereto can then be replaced.

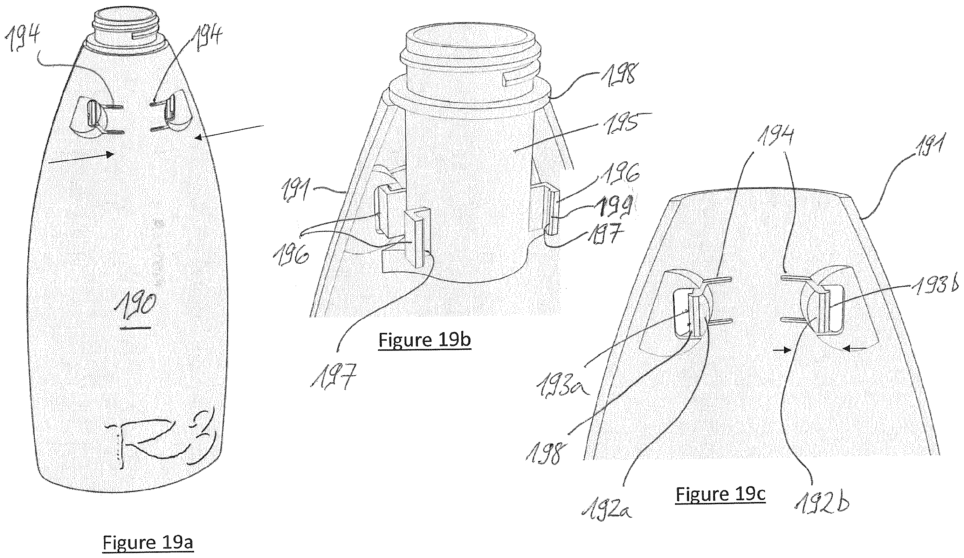

In the seventh embodiment shown in Figures 19, each case element 191 has arms 192a, 192b, each having a hook 193a, 193b at its first, free, end. The second end of the arm 192a, 192b is integral with the main body of the case element 191. Cut-outs 194 are provided which provide the arms 192a, 192b with increased flexibility, particularly in the directions of the arrows B. To secure the neck element 195 in position when the case elements 191 combine together to form a bottle 190, the neck element has corresponding arms 196, generally L-shaped but with a hook 197 extending from the foot of the 'L'. To engage the arms 192a, 192b of the case elements 191 and the arms 196, these are pushed against each other. The pressure thus applied causes relative deformation of the arms 192a, 192b to the arms 196. This action is assisted by the chamfered surfaces 198 and 199 on the arms 192a, 192b and the arms 196 respectively. Once the arms 192a, 192b and the arms 196 are in position, the hooks 193, 197 resist separation of the arms. To aid in correct placement of the neck element 195, and to prevent it slipping from the correct height and into the bottle 190, the neck element includes a flange 198 which rests on the top edge of the case elements 191.

In order to release therefore, pressure is applied by the user by exerting pressure on the arms 192a, 192b to push them towards each other, thereby disengaging them from the arms 196. The case elements can then be separated.

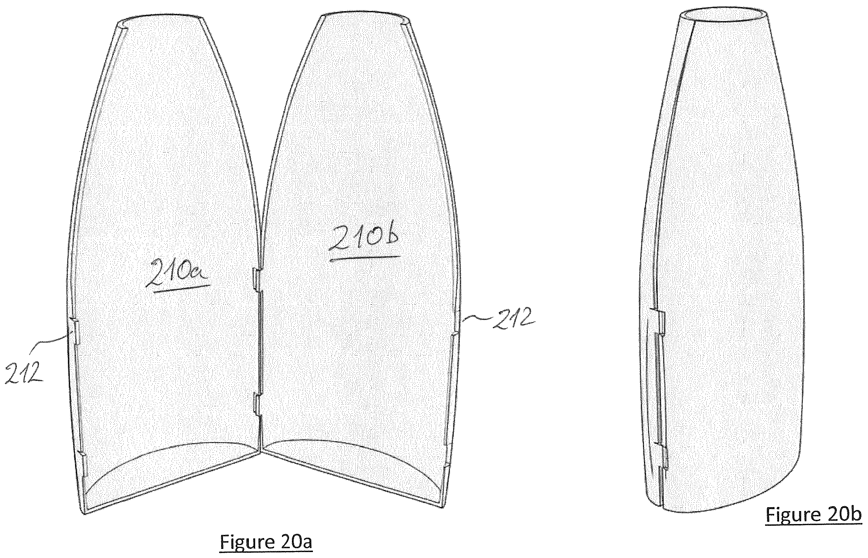

In the embodiment shown in Figures 20, an embodiment is illustrated in which two case elements 210a, 210b are hingedly mounted along their long edges, and fastened together by means of clasps 212 to form a bottle 210. The hinge mounting can be of the type described above for the base-hinged embodiments. The choice of neck element can then be chosen from the embodiments shown above.

## Claims

1. A partially reusable container (100) for retaining and dispensing a fluid, the container comprising;
an outer bottle, said outer bottle having a neck region and a base (102), the bottle comprising two at least partially releasably attachable sections (101a, 101b), moveable relatively between a closed configuration to form the outer bottle and an open configuration allowing a product bag to be inserted or removed;
a product bag (30) attached in fluid tight connection to a neck element, said neck element (110) including a channel opening into the product bag interior, enabling fluid to exit the bag via the channel;
the neck element configured to releasably engage the neck region of the bottle, the neck element including a catch element (114) engaging a securing element on a bottle section to prevent separation of the neck element and bottle section, actuation of the catch element disengaging the neck and securing elements to allow said separation.

2. A container according to Claim 1 including an actuation means (126a, 126b) to actuate a catch element.

3. A container according to Claim 1 or Claim 2, wherein a catch element includes a hook element engaging a corresponding securing element hook on a securing element.

4. A container according to any preceding Claim, wherein a section includes a flange (106), frictionally engaging a rebate (107) on the other section when the bottle is in the closed configuration.

5. A container according to any preceding claim, wherein the sections are of identical shape.

6. A container according to any preceding claim, wherein the sections are so configured that on securing the bottle in the closed configuration, at least a portion of the sections engage under tension.

7. A container according to any preceding claim, wherein the neck element includes a ridge formation (130) engaging a corresponding ridge formation (134) on a section to prevent relative rotation of the neck element and the section.

8. A container according to any preceding claim, wherein a section includes adjacent tubular apertures (115a, 115b) directing access of a user's fingers to a catch element to actuate the catch element.

9. A container according to claims 2 - 7, wherein the actuation means on opposing sections are actuated by pivoting the actuation means with the respective pivot planes mutually parallel.

10. A container according to claim 9, wherein the neck element includes a wing beam (128), intermediate the actuation means and the catch element, pivoting of the actuation means engaging and moving linearly the wing beam which linear movement itself moves the catch element (123) to disengage from the securing element.

11. A container according to claims 2 -- 7, wherein an actuation means comprises a button (179) movable by pressure towards the bottle axis the button movement flexing the catch element and disengaging the catch element from the securing element.

12. A container according to any preceding claims, wherein the container includes dispensing means (111), releasably attachable to the neck element, allowing fluid to be dispensed from the bag.

13. A partially reusable container for retaining and dispensing a fluid, the container comprising;
an outer bottle, said outer bottle having a neck region and a base, the bottle comprising two sections, releasably attachable to each other to form the outer bottle;
a product bag to hold a fluid, the bag having a neck region of a semi-rigid material, and having a bag-neck section to engage a neck section of the bottle, to maintain the neck sections in contiguous contact;
the bag being configured to enable dispensing means, attachable to the bottle, to be placed in a fluid contained in the bag allowing the fluid to be dispensed from the bag.
